# EUROPÄISCHE PATENTSCHRIFT

(11) **EP 4 066 083 B1**
(45) Veröffentlichungstag und Bekanntmachung des Hinweises auf die Patenterteilung: **29.04.2026**
(21) Anmeldenummer: 21749842.7
(22) Anmeldetag: 28.07.2021
(51) Int. Cl.: G05G 1/02, G05G 25/04, B60R 16/00, H01H 13/52, G05G 5/03

(54) **BEDIENELEMENT MIT EINEM EINEN SCHICHTAUFBAU AUFWEISENDEN BETÄTIGUNGSTEIL**
OPERATING ELEMENT COMPRISING AN ACTUATION PART HAVING A LAYER STRUCTURE
ELÉMENT DE COMMANDE DOTÉ D'UNE PIÈCE D'ACTIONNEMENT DE STRUCTURE EN COUCHES

(30) Priorität: 05.08.2020 DE 102020120711
(43) Veröffentlichungstag der Anmeldung: 05.10.2022
(73) Patentinhaber: Preh GmbH, 97616 Bad Neustadt a.d. Saale (DE)
(72) Erfinder: LOEPPEN, Dennis, 98634 Frankenheim (DE); DANGEL, Frank, 36100 Petersberg (DE); BODENSTEIN, Tobias, 97616 Salz (DE); LOCHNER, Peter, 97618 Wollbach (DE); SCHUHMANN, Jochen, 97688 Bad Kissingen (DE)
(74) Vertreter: Lohmanns, Bernard
(86) Internationale Anmeldenummer: PCT/EP2021/071116
(87) Internationale Veröffentlichungsnummer: WO 2022/028977

(56) Entgegenhaltungen:
- EP-A1- 2 325 857
- EP-A2- 1 412 807
- EP-A2- 1 465 118
- WO-A1-2008/006710
- DE-A1- 102009 030 592

## Beschreibung

Die Erfindung betrifft ein Bedienelement mit einem Betätigungsteil, welches eine Betätigungsfläche zur Vornahme einer Bedieneingabe eines Bedieners aufweist. Dem Betätigungsteil ist eine Kraftsensorik zugeordnet, um eine über eine Berührung hinausgehenden Betätigung des Betätigungsteils zu detektieren. Als Betätigung wird eine Verlagerung des Betätigungsteils unter Einwirken einer von einem Bediener aufgebrachten und auf die Betätigungsfläche einwirkenden Betätigungskraft verstanden. Dazu ist das Betätigungsteil regelmäßig elastisch nachgebend an einem Träger gelagert. Die elastische Verlagerung hat zudem die Aufgabe ein sogenanntes passives haptisches Feedback zu erzeugen, das sich aus dem Kraft-Weg-Verlauf bei der Betätigung ergibt. Darüber hinaus hat die elastische Lagerung auch die Aufgabe, eine Bewegung des Betätigungsteils, die durch einen Aktuator mittels eines elektrischen Ansteuersignals erzeugt wird und ein sogenanntes aktives haptisches Feedback beim Bediener hervorrufen soll, zu dämpfen, rückstellend zu wirken und/oder gegenüber dem Träger schwingungsentkoppelnd zu wirken. In den Fällen der beweglichen Lagerung des Betätigungsteils, sei es aus Gründen der rückstellenden Beweglichkeit (passives Feedback) und/oder wegen des aktiven haptischen Feedbacks, stellt sich das Problem, dass in einem Übergangsbereich zwischen dem Betätigungsteil und dem Träger insbesondere zwischen dem Betätigungsteilt und einer am Träger festgelegten Blende ein lichter Abstand eingehalten werden muss, um die Beweglichkeit zu gewährleisten. Dieser lichter Abstand birgt einerseits die Gefahr des Eindringens von Fremdkörpern, wie eines Fluid oder von Staubpartikeln, wodurch die Funktionsfähigkeit des Bedienelements gefährdet ist. Darüber hinaus stellt das Einstellen eines aus ästhetischen Gründen gleichmäßigen Spaltmaßes zwischen Blende und Betätigungsteil andererseits die Montage des Bedienelements vor enorme Herausforderungen.

Vor diesem Hintergrund bestand Bedarf nach einer Lösung für ein Bedienelement mit elastisch nachgebendem Betätigungsteil, das hinsichtlich der konstruktiven Anbindung an den Träger verbessert ist, um so u.a. ein Eindringen von Fremdkörpern zu erschweren und insbesondere eine optisch attraktivere Erscheinung im Übergangsbereich zwischen Träger bzw. Blende und Betätigungsteil zu erreichen. Diese Aufgabe wird durch ein Bedienelement gemäß Anspruch 1 gelöst. Eine gleichermaßen vorteilhafte Verwendung ist Gegenstand des nebengeordneten Anspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die WO 2008/006710 A1 offenbart ein Bedienelement gemäß dem Oberbegriff des Anspruchs 1.

Die Erfindung betrifft ein Bedienelement. Der Begriff "Bedienelement" ist weit auszulegen und dient der Vornahme einer Bedieneingabe mittels eines bewegbaren Betätigungsteils im Rahmen einer Mensch-Maschine-Schnittstelle. Das erfindungsgemäße Bedienelement weist einen Träger auf. Der Begriff "Träger" ist weit auszulegen und meint eine Komponente, die Teil einer tragenden Konstruktion ist oder beispielsweise mittelbar oder unmittelbar an einer Kraftfahrzeugkomponente festgelegt ist. Beispielsweise ist der Träger als Stülpgehäuse ausgeführt. Der Träger ist beispielsweise aus einem Kunststoff, einem Metall oder einer metallischen Legierung, wie ZAMAK, oder Kombinationen daraus ausgebildet.

Erfindungsgemäß ist ferner ein Betätigungsteil vorgesehen, welches eine einem Bediener zugewandte Betätigungsfläche zur Vornahme einer Bedieneingabe durch einen Bediener aufweist. Als betätigende Bedieneingabe wird eine über eine Berührung hinausgehende Betätigung, insbesondere unter gleichzeitiger Berührung, durch einen Bediener verstanden, bei der der Bediener eine senkrecht auf die Betätigungsfläche einwirkende Betätigungskraft aufbringt, um eine der Betätigungskraft folgende Verlagerung des Betätigungsteils, hier unter elastischer, teilweiser Verformung des Betätigungsteils, zu bewirken. Erfindungsgemäß weist das Betätigungsteil ferner einen außerhalb der Betätigungsfläche angeordneten, bevorzugt einen die Betätigungsfläche umgebenden, noch bevorzugter äußeren, Randbereich auf, über den sich das Betätigungsteil am Träger abstützt.

Erfindungsgemäß weist das Betätigungsteil einen die Betätigungsfläche definierenden Schichtaufbau, bevorzugt Folienschichtaufbau, auf.

Erfindungsgemäß weist der Schichtaufbau wenigstens zwei Schichten aus jeweils einem Thermoplast auf. Erfindungsgemäß unterscheiden sich wenigstens zwei der Schichten, d.h. genauer die für die Ausbildung der Schichten jeweils verwendeten Materialien, im Elastizitätsmodul. Erfindungsgemäß ist ein Übergangsbereich zwischen dem Randbereich und der Betätigungsfläche vorgesehen. Der Übergangsbereich zeichnet sich dadurch aus, dass in dem Übergangsbereich diejenige Schicht mit dem kleinsten Elastizitätsmodul der zwei Schichten, die als hochelastische Schicht bezeichnet wird, die größte in einer zur Betätigungsfläche senkrechten Richtung gemessene Schichtdicke im Vergleich zu einer Schichtdicke der anderen Schichten des Schichtaufbaus in demselben Übergangsbereich aufweist, um eine elastische Nachgiebigkeit des Betätigungsteils in einer zur Betätigungsfläche senkrechten Richtung bereitzustellen. Bevorzugt ist in dem Übergangsbereich eine das höchste Elastizitätsmodul der mehreren Schichten des Schichtaufbaus aufweisende, hochfeste Schicht entfernt, also nicht vorhanden, so dass im Übergangsbereich wenigstens die hochelastische Schicht verbleibt, beispielsweise lediglich eine Folie des Folienschichtaufbaus und die hochelastische Schicht.

Erfindungsgemäß ist ein zwischen dem Träger und dem Betätigungsteil angeordneter und/oder wirkender Kraftsensor, um eine Verlagerung des Betätigungsteils in der zur Betätigungsfläche senkrechten Richtung zu detektieren. Der Begriff "Kraftsensor" ist weit auszulegen: Gemäß einer einfachen Ausgestaltung handelt es sich um einen elektromechanischen Schalter, der seinen Schaltzustand in Abhängigkeit der Stellung des Betätigungsteils ändert.

Erfindungsgemäß handelt es sich um einen berührungslos detektierenden Kraftsensor, wie einen kapazitiv, optisch, und/oder induktiv die Betätigungskraft detektierenden Kraftsensor. In einer anderen Ausgestaltung ist der Kraftsensor ausgelegt, die Betätigungskraft anhand einer auf eine Komponente des Kraftsensors wirkenden, mechanischen Einwirkung zu detektieren, wie ein resistiv oder piezoelektrisch detektierender Kraftsensor. Bevorzugt ist der Kraftsensor ausgebildet, die relative Verlagerung zwischen Betätigungsteil und Träger, beispielsweise kapazitiv zu ermitteln, in dem eine Messkapazitätsveränderung zwischen einer am Betätigungsteil festgelegten Elektrode und einer am Träger festgelegten Elektrode bestimmt wird.

Die hochelastische Schicht sorgt aufgrund ihrer Platzierung für eine lokal ausgeprägte elastische Nachgiebigkeit in dem die Betätigungsfläche umgebenden Bereich des Betätigungsteils. Ferner kann auf eine sonstige elastische Lagerung verzichtet werden. Die hochelastische Schicht sorgt für einen flüssigkeitsdichten Übergang zwischen Betätigungsfläche und Träger. Ferner kann so das Betätigungsteil samt seiner elastischen Lagerung in einem Herstellungsschritt, beispielsweise durch thermisches Formen in einem formgebenden Werkzeug hergestellt werden. Dadurch wird die Herstellung und Montage des Bedienelements vereinfacht. Durch die hochelastische Schicht wird eine Beweglichkeit der Betätigungsfläche des Betätigungsteils ohne die Notwendigkeit eines Spaltes zwischen Träger und Betätigungsteil geschaffen. Die hochelastische Schicht sorgt ferner zuverlässig rückstellend und vermeidet eine über die elastische Beanspruchung hinausgehende Überbeanspruchung des Materials des Betätigungsteils. Somit werden plastische, sich nicht rückbildende Verformungen des Betätigungsteils zuverlässig vermieden. Bevorzugt ist neben der Betätigungsfläche auch der Übergangbereich eine Sichtfläche, ist also dem Bediener frei zugänglich angeordnet. Bevorzugt bilden Betätigungsfläche, Übergangsbereich und Randbereich eine zusammenhängende kontinuierlich und stetig übergehende dem Bediener zugewandte Sichtfläche aus.

Bevorzugt ist der Schichtaufbau, bzw. Folienschichtaufbau, einstückig ausgebildet, indem beispielsweise die Schichten, bzw. Folie stoffschlüssig verbunden sind.

Erfindungsgemäß ist in dem zwischen dem Randbereich und der Betätigungsfläche liegenden Übergangsbereich eine die Betätigungsfläche wenigstens abschnittsweise umgebende, gegebenenfalls die Betätigungsfläche vollständig umlaufende, Materialschwächung im Schichtaufbau ausgebildet, um eine elastische Nachgiebigkeit des Betätigungsteils in einer zur Betätigungsfläche senkrechten Richtung bereitzustellen.

In einer Ausgestaltung ist die Ausdehnung der Materialschwächung in der auf die Betätigungsfläche bezogenen Umfangsrichtung auf die Ausdehnung des Randbereichs angepasst, mit dem sich das Betätigungsteil am Träger abstützt. Beispielsweise weist das Betätigungsteil einen freistehenden Randabschnitt auf, welcher nicht am Träger abgestützt ist.

Beispielsweise ist die Materialschwächung so ausgebildet, dass sie alle Schichten bis auf die hochelastische Schicht und bis auf die optionale Folie des Schichtaufbaus durchgreift. In einer Ausgestaltung ragt die Materialschwächung bis in die hochelastische Schicht hinein, ohne diese im Übergangsbereich zu durchbrechen. Die Materialschwächung sorgt aufgrund ihrer Platzierung für eine lokal ausgeprägte elastische Nachgiebigkeit in dem die Betätigungsfläche umgebenden Bereich des Betätigungsteils.

Bevorzugt ist die Materialschwächung durch eine umlaufende, auf der dem Bediener abgewandten Seite des Betätigungsteils vorgesehene Nut ausgebildet, so dass die dem Bediener zugewandte Oberfläche des Betätigungsteils, die die Betätigungsfläche und die dem Bediener zugewandte Oberfläche des Randbereichs beinhaltet, nicht durch die Nut durchbrochen ist.

Zur mechanischen Stabilisierung des Betätigungsteils, insbesondere im Bereich der Betätigungsfläche, erstreckt sich die das höchste Elastizitätsmodul der mehreren Schichten aufweisende, hochfeste Schicht im Wesentlichen parallel zur Betätigungsfläche.

Bevorzugt ist die das geringste Elastizitätsmodul der mehreren Schichten aufweisende, hochfeste Schicht aus einem Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) ausgebildet. Bevorzugt ist die hochfeste Schicht aus PC oder ABS.

Erfindungsgemäß ist ferner ein Aktuator zur Schwingungs- und/oder Bewegungsanregung des Betätigungsteils und somit zur Erzeugung eines aktiven haptischen Feedbacks vorgesehen, der zwischen dem Träger und dem Betätigungsteil angeordnet ist. Bei dem Aktuator handelt es sich um einen aktiven Aktuator, also einen durch ein von einer Steuerelektronik bereitgestelltes Ansteuersignal triggerbaren Aktuator, der durch einen Impulseintrag, wie Stoßeintrag, oder Schwingungseintrag in die angrenzend angeordnete Komponente, nämlich in das Betätigungsteil, in der Lage ist, in diesem eine Bewegung oder Schwingung anzuregen, welche vom Bediener über den auf der Betätigungsfläche ruhenden Finger haptisch wahrnehmbar ist. Diese haptische Wahrnehmung dient beispielsweise als Bestätigungssignal für eine vorgenommene Berührung oder Betätigung oder als haptische Quittierung einer vorgenommenen Schalt- oder Steuerfunktionszuordnung durch eine Auswerteinheit. Bevorzugt handelt es sich bei dem Aktuator um einen auf Trägheit beruhenden, motorbasierten Aktuator, wie einen Motor auf dessen rotierender Antriebswelle eine bezüglich ihres Schwerpunkts exzentrisch montierte Masse festgelegt ist oder einen Magnetspulen-Aktuator oder einen piezoelektrischen Aktuator oder einen linearen Breitbandaktuator, wie einen Tauchspulenaktuator (englische Bezeichnung; Voice-Coil-Actuator) oder einen linearen Resonanzaktuator. Erfindungsgemäß ist der Aktuator ausschließlich am Betätigungsteil kraft- oder stoffschlüssig festgelegt, beispielsweise durch Verschrauben oder Verkleben. Es kann auch ein zwischen dem Träger und dem Betätigungsteil anziehend oder abstoßend wirkender elektromagnetischer Aktuator vorgesehen sein.

Bevorzugt ist die hochelastische Schicht aus einem thermoplastischen Elastomer, wie einem thermoplastischen Polyurethan, oder einem thermoplastischen Vulkanisat, wie aus einem ein Ethylen-Propylen-Dien-Kautschuk aufweisenden Vulkanisat ausgebildet.

Bevorzugt weist die hochelastische Schicht eine Shore-A Härte im Bereich von mehr als 55 bis weniger als 95, bevorzugter im Bereich von 65 bis 85, auf.

Wie zuvor erwähnt ist der Schichtaufbau bevorzugt eine eine Folie, wie eine Polycarbonat-Folie (PC-Folie) beinhaltender Folienschichtaufbau. Bevorzugter ist die Folie eine die Betätigungsfläche ausbildende äußere Schicht des Folienschichtaufbaus.

Bevorzugt bildet die Folie eine sich über die Betätigungsfläche, den Übergangsbereich und den Randbereich erstreckende, gemeinsame Sichtfläche aus.

Beispielsweise wird das Eingabeteil wie folgt erzeugt: In einem ersten formgebenden Schritt wird ein Thermoplast, wie PC oder ABS, zu einem Formling geformt, welcher die hochfeste Schicht des zu erzeugenden Folienschichtaufbaus ausbildet. In einem nachfolgenden Schritt werden eine Folie, wie eine PC-Folie und der Formling in die Cavität eines formgebenden Werkzeugs eingebracht, wobei ein Hohlraum zwischen beiden verbleibt. In einem nachfolgenden Spritzformschritt wird der Hohlraum mit dem weiteren Thermoplast, wie dem thermoplastischen Elastomer oder dem thermoplastischen Vulkanisat in einem thermischen Spritzformschritt verfüllt, um einen einstückigen Folienschichtaufbau auszubilden, dessen Schichten bzw. Folie untereinander stoffschlüssig verbunden sind.

Bevorzugt weist das Betätigungsteil einen Durchbruch auf, in dem ein händisch bedienbares elektronisches oder elektromechanisches Eingabeteil, wie ein Drehsteller oder ein bevorzugt mit dem Daumen der auf dem Lenkradkranz ruhenden Hand zu bedienender Walzensteller angeordnet ist.

Ferner kann eine kapazitive Berührsensorik zur Detektion einer Berührung des Betätigungsteils im Bereich der Betätigungsfläche vorgesehen sein. Beispielsweise ist mindestens eine auf der dem Bediener abgewandten Seite des Betätigungsteils aufgebrachte, leitfähige Schicht vorgesehen, um eine Elektrodenstruktur der elektrischen Berührsensorik zur Detektion einer Berührung der Betätigungsfläche bereitzustellen. Beispielsweise bildet die leitfähige Schicht oder die mehreren Schichten ein Array von Elektroden aus, die der kapazitiven, ortsaufgelösten Detektion einer Berührung auf der Betätigungsfläche dienen. Die Verfahren zur Berührdetektion sind dem Fachmann bekannt, beispielsweise werden die Elektroden mit unterschiedlichem Potenzial beaufschlagt, um ein die Betätigungsfläche durchdringendes, eine Messkapazität definierendes Messfeld zu erzeugen, welches bei Berührung durch den Bediener beeinflusst wird. Die daraus resultierende Messkapazitätsbeeinflussung wird durch eine Auswerteinheit detektiert. Bei gleichmäßiger örtlicher Verteilung des Arrays über die Betätigungsfläche ist gemäß einer bevorzugten Ausgestaltung eine ortsauflösende Detektion der Berührung auf der Betätigungsfläche ermöglicht.

Gemäß einer bevorzugten Ausgestaltung des Bedienelements umfasst die Betätigungsfläche wenigstens eine zu hinterleuchtende Leuchtfläche, die Beispielsweise die Form und/oder den Umriss eines Symbols wiedergibt. Dabei bildet wenigstens eine Schicht des Schichtaufbaus eine Ausnehmung oder einen Durchbruch zur Bildung eines Lichtkanals aus, um Licht von einer am Träger festgelegten Lichtquelle zur Hinterleuchtung zur Leuchtfläche zu leiten.

Die Erfindung betrifft ferner eine Anordnung aus einem Bedienelement in einer der zuvor beschriebenen Ausführungsformen und einem Kraftfahrzeuglenkrad, wobei das Bedienelement im Bereich einer sich zwischen einem Lenkradkranz und einer Lenkradnabe erstreckenden Speiche des Kraftfahrzeuglenkrads angeordnet ist. Bevorzugt ist das Betätigungsteil über den Randbereich einstückig mit einer Blende ausgebildet, die sich um einen die Lenkradnabe bedeckenden Pralltopf erstreckt. Beispielsweise ist der Träger und die Blende starr miteinander verbunden.

Die Erfindung betrifft ferner die Verwendung des Bedienelements in einer der zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen jeweils lediglich eine bevorzugte Ausführungsvariante dar. Es zeigen:
- Fig. 1: eine Schnittdarstellung einer Ausführungsform des erfindungsgemäßen Bedienelements 1,
- Fig. 2: eine Aufsicht auf die erfindungsgemäße Anordnung;
- Fig. 3: eine Rückansicht der Blende aus Figur 2.

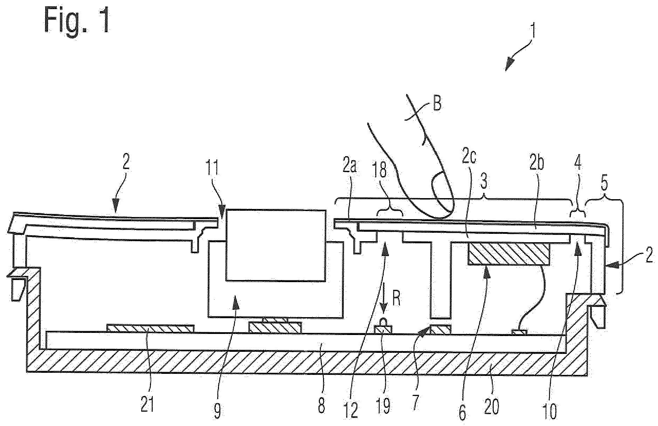

Figur 1 zeigt eine erste Ausführungsform des erfindungsgemäßen Bedienelements 1. Es dient der Vornahme einer Bedieneingabe mittels eines bewegbaren Betätigungsteils 2 im Rahmen einer Mensch-Maschine-Schnittstelle.

Das erfindungsgemäße Bedienelement 1 weist einen Träger 20 auf. Der Begriff "Träger" meint eine Komponente die Teil einer tragenden Konstruktion ist oder beispielsweise mittelbar oder unmittelbar an einer Kraftfahrzeugkomponente, wie einem Kraftfahrzeuglenkrad festgelegt ist. Hier ist der Träger 20 als Stülpgehäuse ausgeführt. Der Träger 20 ist beispielsweise aus einem Kunststoff, einem Metall oder einer metallischen Legierung, wie ZAMAK, oder Kombinationen daraus ausgebildet.

Es ist ferner ein Betätigungsteil 2 vorgesehen, welches eine einem Bediener B zugewandte Betätigungsfläche 3 zur Vornahme einer Bedieneingabe durch einen Bediener B aufweist. Als betätigende Bedieneingabe wird eine über eine Berührung hinausgehende Betätigung, insbesondere unter gleichzeitiger Berührung, durch den Bediener B verstanden, bei der der Bediener B eine senkrecht auf die Betätigungsfläche 3 einwirkende Betätigungskraft aufbringt, um eine der Betätigungskraft folgende Verlagerung des Betätigungsteils 2 , hier unter elastischer, teilweiser Verformung des Betätigungsteils 2, zu bewirken. Das Betätigungsteil 2 weist ferner einen außerhalb der Betätigungsfläche 3 angeordneten, einen die Betätigungsfläche 3 umgebenden, äußeren, Randbereich 5 auf, über den sich das Betätigungsteil 2 am Träger 20 abstützt.

Zudem weist das Betätigungsteil 2 einen die Betätigungsfläche 3 definierenden Schichtaufbau 2a, 2b, 2c auf, der als Folienschichtaufbau ausgebildet ist. Der Schichtaufbau 2a, 2b, 2c weist eine Folie 2a und zwei Schichten 2b, 2c aus jeweils einem Thermoplast auf. Wenigstens zwei der Schichten 2b, 2c, d.h. genauer die für die Ausbildung der Schichten jeweils verwendeten Materialien, unterscheiden sich im Elastizitätsmodul. Es ist ein Übergangsbereich 4 zwischen dem Randbereich 5 und der Betätigungsfläche 3 vorgesehen. Der Übergangsbereich 4 zeichnet sich dadurch aus, dass diejenige Schicht mit dem kleinsten Elastizitätsmodul der zwei Schichten, die als hochelastische Schicht 2b bezeichnet wird, die größte in einer zur Betätigungsfläche 3 senkrechten Richtung R gemessene Schichtdicke im Vergleich zu einer Schichtdicke der anderen Schichten 2a, 2c des Schichtaufbaus 2a, 2b, 2c in dem Übergangsbereich 4 aufweist, um eine elastische Nachgiebigkeit des Betätigungsteils 2 in der zur Betätigungsfläche 3 senkrechten Richtung R bereitzustellen. Genauer: Hier ist im Übergangsbereich 4 lediglich genau eine und nur die eine hochelastische Schicht 2b vorgesehen.

Ferner ist ein zwischen dem Träger 20 und dem Betätigungsteil 2 angeordneter Kraftsensor 7 vorgesehen, um die Verlagerung des Betätigungsteils 2 in der zur Betätigungsfläche 3 senkrechten Richtung R zu detektieren. Hier handelt es sich um einen kapazitiv detektierenden Kraftsensor 7.

Die hochelastische Schicht 2b sorgt aufgrund ihrer Platzierung im Übergangsbereich 4 für eine lokal ausgeprägte elastische Nachgiebigkeit in diesem die Betätigungsfläche 3 umgebenden Bereich des Betätigungsteils 3. Ferner kann auf eine sonstige elastische Lagerung verzichtet werden. Die hochelastische Schicht 2b sorgt ferner für einen flüssigkeitsdichten Übergang zwischen Betätigungsfläche 3 und Träger 20. Ferner kann so das Betätigungsteil 2 samt seiner elastischen Lagerung in einem Herstellungsschritt, beispielsweise durch thermisches Formen in einem formgebenden Werkzeug hergestellt werden. Dadurch wird die Herstellung und Montage des Bedienelements 2 vereinfacht. Durch die hochelastische Schicht 2b wird eine Beweglichkeit der Betätigungsfläche 3 des Betätigungsteils 2 ohne die Notwendigkeit eines Spaltes zwischen Träger 20 und Betätigungsteil 2 geschaffen. Die hochelastische Schicht 2b sorgt ferner zuverlässig rückstellend und vermeidet eine über die elastische Beanspruchung hinausgehende Überbeanspruchung des Materials des Betätigungsteils 2. Somit werden plastische, sich nicht rückbildende Verformungen des Betätigungsteils 2 zuverlässig vermieden. Hier ist nicht nur neben der Betätigungsfläche 3 auch der Übergangbereich 4 eine Sichtfläche, ist also dem Bediener B frei zugänglich angeordnet. Vielmehr bilden Betätigungsfläche 3, Übergangsbereich 4 und Randbereich 5 eine zusammenhängende kontinuierlich und stetig übergehende dem Bediener B zugewandte Sichtfläche aus.

Wie in Figur 1 zu sehen, ist in dem zwischen dem Randbereich 5 und der Betätigungsfläche 3 liegenden Übergangsbereich 4 eine die Betätigungsfläche wenigstens abschnittsweise umgebende, Materialschwächung 10 in Form einer auf der dem Bediener B abgewandten Seite des Betätigungsteils 2 vorgesehene Nut im Schichtaufbau 2a, 2b, 2c ausgebildet, um eine elastische Nachgiebigkeit des Betätigungsteils 2 in der zur Betätigungsfläche 3 senkrechten Richtung R bereitzustellen.

Dabei ist die Materialschwächung 10 so ausgebildet, dass sie alle Schichten abgesehen von der hochelastischen Schicht 2b und abgesehen von der Folie 2a des Schichtaufbaus 2a, 2b, 2c durchgreift.

Zur mechanischen Stabilisierung des Betätigungsteils 2, insbesondere im Bereich der Betätigungsfläche 3, erstreckt sich die das höchste Elastizitätsmodul der mehreren Schichten aufweisende, hochfeste Schicht 2c im Wesentlichen parallel zur Betätigungsfläche 3.

Es ist ferner ein Aktuator 6 zur Schwingungs- und/oder Bewegungsanregung des Betätigungsteils 2 und somit zur Erzeugung eines aktiven haptischen Feedbacks vorgesehen, der zwischen dem Träger 20 und dem Betätigungsteil 2 angeordnet ist. Bei dem Aktuator handelt es sich um einen aktiven Aktuator, also einen durch ein von einer Steuerelektronik 21 bereitgestelltes Ansteuersignal triggerbaren Aktuator, der durch einen Impulseintrag, wie Stoßeintrag, oder Schwingungseintrag in die angrenzend angeordnete Komponente, nämlich in das Betätigungsteil 2, in der Lage ist, in diesem eine Bewegung oder Schwingung anzuregen, welche vom Bediener B über den auf der Betätigungsfläche 3 ruhenden Finger haptisch wahrnehmbar ist. Die Steuerelektronik 21 ist zusammen mit dem Kraftsensor 7 auf einer Leiterplatte 8 angeordnet, die am Träger 20 festgelegt ist.

Ferner weist das Betätigungsteil 2 einen Durchbruch 11 auf, in dem ein händisch bedienbares elektronisches oder elektromechanisches Eingabeteil 11, wie ein Drehsteller oder ein bevorzugt mit dem Daumen der auf dem Lenkradkranz ruhenden Hand zu bedienender Walzensteller angeordnet ist. Ferner umfasst die Betätigungsfläche 3 wenigstens eine zu hinterleuchtende Leuchtfläche 18, die die Form und/oder den Umriss eines Symbols wiedergibt. Dabei bildet wenigstens eine Schicht 2c des Schichtaufbaus 2a, 2b, 2c eine Ausnehmung oder einen Durchbruch zur Bildung eines Lichtkanals 12 aus, um Licht von einer am Träger 20 festgelegten und auf der Leiterplatte 8 angeordneten Lichtquelle 19 zur Hinterleuchtung zur Leuchtfläche 18 zu leiten. Beispielsweise ist der im Bereich der Leuchtfläche 18 verbleibende Schichtaufbau transluzent ausgebildet. Dies wird beispielsweise dadurch erreicht, dass die Folie 2a oder die hochelastische Schicht 2b mit einer opaken Beschichtung versehen ist, die im Bereich der Leuchtfläche 18 fehlt oder entfernt wurde.

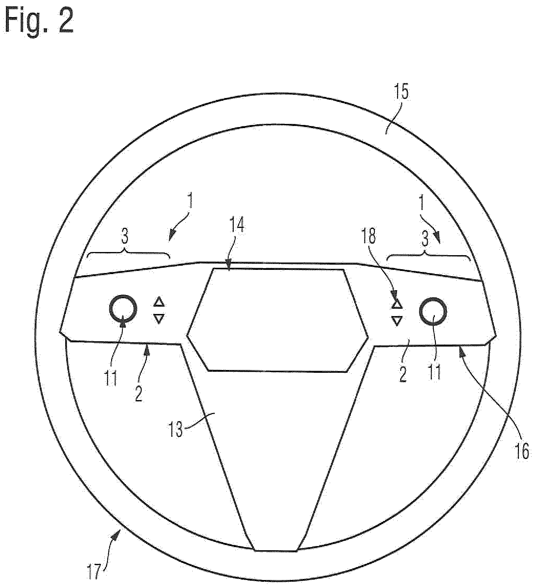

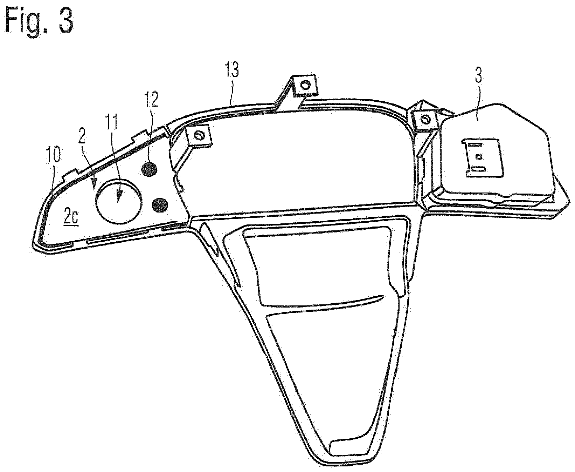

Die Figuren 2 und 3 zeigen eine Anordnung aus dem Bedienelement 1 der Figur 1 und einem Kraftfahrzeuglenkrad 17, wobei das Bedienelement im Bereich einer sich zwischen dem Lenkradkranz 15 und einer Lenkradnabe erstreckenden Speiche 16 des Kraftfahrzeuglenkrads 17 angeordnet ist. Dabei ist das Betätigungsteil 2 über den Randbereich 5 einstückig mit einer Blende 13 ausgebildet, die sich um einen die Lenkradnabe bedeckenden Pralltopf 14 erstreckt. Der Träger 20 aus Figur 1 und die Blende 1 sind dabei starr über eine Rastverbindung miteinander verbunden. Figur 3 ist die zugehörige Rückansicht auf das Betätigungsteil 2 und die Blende 13.

## Patentansprüche

1. Bedienelement (1), aufweisend:
einen Träger (20);
ein Betätigungsteil (2), welches eine einem Bediener (B) zugewandte Betätigungsfläche (3) zur Vornahme einer Bedieneingabe durch den Bediener (B) aufweist und das Betätigungsteil (2) ferner einen außerhalb der Betätigungsfläche (3) vorgesehenen Randbereich (5) aufweist, über den sich das Betätigungsteil (2) am Träger (20) abstützt;
wobei das Betätigungsteil (2) einen die Betätigungsfläche (3) definierenden Schichtaufbau (2a, 2b, 2c), wie einen Folienschichtaufbau, aufweist und der Schichtaufbau (2a, 2b, 2c) wenigstens zwei Schichten (2b, 2c) aus jeweils einem Thermoplast aufweist, und die zwei Schichten (2b, 2c) sich im Elastizitätsmodul unterscheiden;
wobei in einem Übergangsbereich (4) zwischen dem Randbereich (5) und der Betätigungsfläche (3) diejenige, als hochelastische Schicht (2b) bezeichnete Schicht mit dem kleinsten Elastizitätsmodul der zwei Schichten, die größte in einer zur Betätigungsfläche (3) senkrechten Richtung (R) gemessene Schichtdicke im Vergleich zu einer Schichtdicke der anderen Schichten (2a, 2c) des Schichtaufbaus (2a, 2b, 2c) in dem Übergangsbereich aufweist, um eine elastische Nachgiebigkeit des Betätigungsteils (2) in einer zur Betätigungsfläche (3) senkrechten Richtung (R) bereitzustellen; wobei in dem Übergangsbereich (4) eine die Betätigungsfläche (3) wenigstens abschnittsweise umgebende Materialschwächung (10) in dem Schichtaufbau (2a, 3b, 2c) ausgebildet ist;
einen zwischen dem Träger (20) und dem Betätigungsteil (2) angeordneten Kraftsensor (7), um eine Verlagerung des Betätigungsteils (2) in der zur Betätigungsfläche (3) senkrechten Richtung (R) zu detektieren,
**dadurch gekennzeichnet, dass** der Kraftsensor (7) ein berührungslos detektierender Kraftsensor ist, dass das Bedienelement (1) einen Aktuator (6) zur Schwingungs- und/oder Bewegungsanregung des Betätigungsteils (2) und somit zur Erzeugung eines aktiven haptischen Feedbacks aufweist, der zwischen dem Träger (20) und dem Betätigungsteil (2) angeordnet ist wobei der Aktuator (6) ausschließlich am Betätigungsteil (2) kraft- oder stoffschlüssig festgelegt ist.

2. Bedienelement (1) gemäß Anspruch 1, wobei in dem Übergangsbereich (4) eine das höchste Elastizitätsmodul der mehreren Schichten des Schichtaufbaus aufweisende, hochfeste Schicht (2c) entfernt ist und wenigstens die hochelastische Schicht (2b) verbleibt.

3. Bedienelement (1) gemäß dem vorhergehenden Anspruch, wobei die Materialschwächung (10) durch eine auf der dem Bediener (B) abgewandten Seite des Betätigungsteils (2) vorgesehene Nut ausgebildet ist.

4. Bedienelement (1) gemäß einem der vorhergehenden Ansprüche, wobei die das höchste Elastizitätsmodul der mehreren Schichten des Schichtaufbaus aufweisende, hochfeste Schicht (2c) sich im Wesentlichen parallel zur Betätigungsfläche (3) erstreckt.

5. Bedienelement (1) gemäß einem der vorhergehenden Ansprüche, wobei die hochelastische Schicht (2b) aus einem thermoplastischen Elastomer, wie einem thermoplastischen Polyurethan, oder einem thermoplastischen Vulkanisat, wie ein Ethylen-Propylen-Dien-Kautschuk aufweisendes Vulkanisat ausgebildet ist.

6. Bedienelement (1) gemäß einem der vorhergehenden Ansprüche, wobei die hochelastische Schicht (2b) eine Shore-A Härte im Bereich von mehr als 55 bis weniger als 95, bevorzugt im Bereich von 65 bis 85, aufweist.

7. Bedienelement (1) gemäß einem der vorhergehenden Ansprüche, wobei der Schichtaufbau (2a, 2b, 2c) eine eine Folie (2a), wie eine Polycarbonat-Folie beinhaltender Folienschichtaufbau ist.

8. Bedienelement (1) gemäß dem vorhergehenden Anspruch, wobei die Folie (2a) eine die Betätigungsfläche (3) ausbildende äußere Schicht des Schichtaufbaus (2a, 2b, 2c) ist.

9. Bedienelement (1) gemäß dem vorhergehenden Anspruch, wobei die Folie (2a) eine sich über die Betätigungsfläche (3), den Übergangsbereich (4) und den Randbereich (5) erstreckende, gemeinsame Sichtfläche ausbildet.

10. Anordnung aus einem Bedienelement (1) gemäß einem der vorhergehenden Ansprüche und einem Kraftfahrzeuglenkrad (17), wobei das Bedienelement (1) im Bereich einer sich zwischen einem Lenkradkranz (15) und einer Lenkradnabe erstreckenden Speiche (16) des Kraftfahrzeuglenkrads (17) angeordnet ist.

11. Anordnung gemäß dem vorhergehenden Anspruch, wobei das Betätigungsteil (2) einstückig mit einer Blende (13) ausgebildet ist, die die sich um einen die Lenkradnabe bedeckenden Pralltopf (14) erstreckt.

12. Anordnung gemäß einem der beiden vorhergehenden Ansprüche, wobei das Betätigungsteil (2) einen Durchbruch (11) aufweist, in dem ein händisch bedienbares elektronisches oder elektromechanisches Eingabeteil (9) angeordnet ist.

13. Verwendung des Bedienelements (1) gemäß einem der vorhergehenden Ansprüche 1 bis 9 in einem Kraftfahrzeug.

## Claims

1. Operating element (1), comprising:
a carrier (20);
an actuating part (2), which has an actuation surface (3) facing an operator (B) for making an operating input by the operator (B) and the actuating part (2) further has an edge region (5) provided outside the actuation surface (3), via which the actuating part (2) is supported on the carrier (20);
wherein the actuating part (2) has a layer structure (2a, 2b, 2c) defining the actuation surface (3), such as a film layer structure, and the layer structure (2a, 2b, 2c) has at least two layers (2b, 2c) each made of a thermoplastic, and the two layers (2b, 2c) differ in the modulus of elasticity;
wherein in a transition region (4) between the edge region (5) and the actuation surface (3) that layer, referred to as highly elastic layer (2b), having the smallest modulus of elasticity of the two layers, has the greatest layer thickness measured in a direction (R) perpendicular to the actuation surface (3) in comparison with a layer thickness of the other layers (2a, 2c) of the layer structure (2a, 2b, 2c) in the transition region, in order to provide an elastic compliance of the actuating part (2) in a direction (R) perpendicular to the actuation surface (3);
wherein in the transition region (4) a material weakening (10) at least sectionally surrounding the actuation surface (3) is formed in the layer structure (2a, 3b, 2c);
a force sensor (7) arranged between the carrier (20) and the actuating part (2) in order to detect a displacement of the actuating part (2) in the direction (R) perpendicular to the actuation surface (3),
**characterized in that** the force sensor (7) is a contactlessly detecting force sensor and that the operating element (1) has an actuator (6) for vibration and/or motion excitation of the actuating part (2) and thus for generating active haptic feedback, which is arranged between the carrier (20) and the actuating part (2), wherein the actuator (6) is exclusively fixed to the actuating part (2) by force fit or material bond.

2. Operating element (1) according to claim 1, wherein in the transition region (4) a high-strength layer (2c) having the highest modulus of elasticity of the plurality of layers of the layer structure is removed and at least the highly elastic layer (2b) remains.

3. Operating element (1) according to the preceding claim, wherein the material weakening (10) is formed by a groove provided on the side of the actuating part (2) facing away from the operator (B).

4. Operating element (1) according to one of the preceding claims, wherein the high-strength layer (2c) having the highest modulus of elasticity of the plurality of layers of the layer structure extends substantially parallel to the actuation surface (3).

5. Operating element (1) according to one of the preceding claims, wherein the highly elastic layer (2b) is formed from a thermoplastic elastomer, such as a thermoplastic polyurethane, or a thermoplastic vulcanizate, such as a vulcanizate having an ethylene-propylene-diene rubber.

6. Operating element (1) according to one of the preceding claims, wherein the highly elastic layer (2b) has a Shore A hardness in the range of more than 55 to less than 95, preferably in the range of 65 to 85.

7. Operating element (1) according to one of the preceding claims, wherein the layer structure (2a, 2b, 2c) is a film layer structure comprising a film (2a), such as a polycarbonate film.

8. Operating element (1) according to the preceding claim, wherein the film (2a) is an outer layer of the layer structure (2a, 2b, 2c) forming the actuation surface (3).

9. Operating element (1) according to the preceding claim, wherein the film (2a) forms a common visible surface extending over the actuation surface (3), the transition region (4) and the edge region (5).

10. Arrangement comprising an operating element (1) according to one of the preceding claims and a motor vehicle steering wheel (17), wherein the operating element (1) is arranged in the region of a spoke (16) of the motor vehicle steering wheel (17) extending between a steering wheel rim (15) and a steering wheel hub.

11. Arrangement according to the preceding claim, wherein the actuating part (2) is formed integrally with a trim panel (13) which extends around an airbag cover (14) covering the steering wheel hub.

12. Arrangement according to one of the two preceding claims, wherein the actuating part (2) has an opening (11) in which a manually operable electronic or electromechanical input part (9) is arranged.

13. Use of the operating element (1) according to one of the preceding claims 1 to 9 in a motor vehicle.

## Revendications

1. Élément de commande (1), comprenant :
un support (20) ;
une pièce d'actionnement (2), laquelle comporte une surface d'actionnement (3) tournée vers un opérateur (B) pour effectuer une entrée de commande par l'opérateur (B) et la pièce d'actionnement (2) comporte en outre une zone de bord (5) prévue en dehors de la surface d'actionnement (3), par laquelle la pièce d'actionnement (2) prend appui sur le support (20) ;
dans lequel la pièce d'actionnement (2) présente une structure de couches (2a, 2b, 2c) définissant la surface d'actionnement (3), telle qu'une structure de couches de film, et la structure de couches (2a, 2b, 2c) comporte au moins deux couches (2b, 2c) chacune en un thermoplastique, et les deux couches (2b, 2c) diffèrent par le module d'élasticité ;
dans lequel, dans une zone de transition (4) entre la zone de bord (5) et la surface d'actionnement (3), la couche, désignée comme couche hautement élastique (2b), ayant le plus petit module d'élasticité des deux couches, présente la plus grande épaisseur de couche mesurée dans une direction (R) perpendiculaire à la surface d'actionnement (3) par comparaison avec une épaisseur de couche des autres couches (2a, 2c) de la structure de couches (2a, 2b, 2c) dans la zone de transition, afin de fournir une compliance élastique de la pièce d'actionnement (2) dans une direction (R) perpendiculaire à la surface d'actionnement (3) ;
dans lequel, dans la zone de transition (4), un affaiblissement de matière (10) entourant au moins par sections la surface d'actionnement (3) est formé dans la structure de couches (2a, 3b, 2c) ;
un capteur de force (7) disposé entre le support (20) et la pièce d'actionnement (2) afin de détecter un déplacement de la pièce d'actionnement (2) dans la direction (R) perpendiculaire à la surface d'actionnement (3),
**caractérisé en ce que** le capteur de force (7) est un capteur de force détectant sans contact et **en ce que** l'élément de commande (1) comporte un actionneur (6) pour exciter la pièce d'actionnement (2) en vibration et/ou en mouvement et ainsi pour produire un retour haptique actif, lequel est disposé entre le support (20) et la pièce d'actionnement (2), l'actionneur (6) étant fixé exclusivement à la pièce d'actionnement (2) par liaison par forme ou par liaison de matière.

2. Élément de commande (1) selon la revendication 1, dans lequel, dans la zone de transition
(4), une couche haute résistance (2c) présentant le module d'élasticité le plus élevé de la pluralité de couches de la structure de couches est supprimée et au moins la couche hautement élastique (2b) demeure.

3. Élément de commande (1) selon la revendication précédente, dans lequel l'affaiblissement de matière (10) est formé par une rainure prévue sur le côté de la pièce d'actionnement (2) opposé à l'opérateur (B).

4. Élément de commande (1) selon l'une des revendications précédentes, dans lequel la couche haute résistance (2c) présentant le module d'élasticité le plus élevé de la pluralité de couches de la structure de couches s'étend essentiellement parallèlement à la surface d'actionnement (3).

5. Élément de commande (1) selon l'une des revendications précédentes, dans lequel la couche hautement élastique (2b) est réalisée en un élastomère thermoplastique, tel qu'un polyuréthane thermoplastique, ou en un vulcanisat thermoplastique, tel qu'un vulcanisat comprenant un caoutchouc éthylène-propylène-diène.

6. Élément de commande (1) selon l'une des revendications précédentes, dans lequel la couche hautement élastique (2b) présente une dureté Shore A dans la plage de plus de 55 à moins de 95, de préférence dans la plage de 65 à 85.

7. Élément de commande (1) selon l'une des revendications précédentes, dans lequel la structure de couches (2a, 2b, 2c) est une structure de couches de film comprenant un film (2a), tel qu'un film de polycarbonate.

8. Élément de commande (1) selon la revendication précédente, dans lequel le film (2a) est une couche externe de la structure de couches (2a, 2b, 2c) formant la surface d'actionnement (3).

9. Élément de commande (1) selon la revendication précédente, dans lequel le film (za) forme une surface visible commune s'étendant sur la surface d'actionnement (3), la zone de transition (4)
et la zone de bord (5).

10. Agencement comprenant un élément de commande (1) selon l'une des revendications précédentes et un volant de véhicule automobile (17), dans lequel l'élément de commande (1) est disposé dans la zone d'un rayon (16) du volant de véhicule automobile (17) s'étendant entre une jante de volant (15) et un moyeu de volant.

11. Agencement selon la revendication précédente, dans lequel la pièce d'actionnement (2) est réalisée d'une seule pièce avec un enjoliveur (13) qui s'étend autour d'un couvercle d'airbag (14) recouvrant le moyeu de volant.

12. Agencement selon l'une des deux revendications précédentes, dans lequel la pièce d'actionnement (2) comporte une ouverture (11) dans laquelle est disposé un élément d'entrée (9) électronique ou électromécanique actionnable manuellement.

13. Utilisation de l'élément de commande (1) selon l'une des revendications précédentes 1 à 9 dans un véhicule automobile.
